Europäisches Patentamt

European Patent Office

Office européen des brevets

(11) Veröffentlichungsnummer: **0 176 912**
**B1**

(12) # EUROPÄISCHE PATENTSCHRIFT

(45) Veröffentlichungstag der Patentschrift:
08.11.89

(51) Int. Cl.⁴: **C 02 F 1/28**

(21) Anmeldenummer: 85112036.0

(22) Anmeldetag: 23.09.85

(54) Verfahren zur Reinigung von Abwasser.

(30) Priorität: 05.10.84 DE 3436453

(43) Veröffentlichungstag der Anmeldung:
09.04.86 Patentblatt 86/15

(45) Bekanntmachung des Hinweises auf die Patenterteilung:
08.11.89 Patentblatt 89/45

(84) Benannte Vertragsstaaten:
AT BE CH DE FR GB IT LI NL

(56) Entgegenhaltungen:
DE-A- 2 109 022
DE-A- 3 025 353
FR-A- 715 509
US-A- 3 337 454
US-A- 4 076 616

CHEMICAL ENGINEERING, Band 88, Nr. 6, 23. März 1981, Seiten 88-89, New York, US; A.D. HOLIDAY et al.: "Activated carbon removes pesticides from wastewater"
WATER RESEARCH, Band 11, Nr. 8, 1977, Seiten 617-620, Pergamon Press, London, GB; M.A. EL-DIB et al.: "Removal of phenylamide pesticides from drinking waters - II. Adsorption on powdered carbon"

(73) Patentinhaber: BAYER AG,
D-5090 Leverkusen 1 Bayerwerk (DE)

(72) Erfinder: Krauthausen, Edmund, Dr.,
Franz-Grillparzer-Ring 4, D-5000 Köln 71 (DE)
Erfinder: Schmidt, Friedrich, Dr., In den Birken 77,
D-5600 Wuppertal 1 (DE)

## Beschreibung

Die Erfindung betrifft ein Verfahren zur Reinigung von Abwasser, insbesondere pestizidhaltigem Abwasser, unter Verwendung von Aktivkohle.

In den letzten Jahren sind in zunehmendem Masse Abwasserreinigungsverfahren bekannt geworden, bei denen biologischer Abbau und Adsorption an Aktivkohle kombiniert werden. Technisch wird das Verfahren in der Weise ausgeführt, dass dem belüfteten Belebtschlammbecken Aktivkohle zugesetzt wird. Bei einer modernen Variante dieses Verfahrens erfolgt zunächst eine Vorreinigung durch Flockung und Dekantation. Danach wird das Abwasser in grosse offene Becken geleitet, die makroporöse Holzkohle in Form eines Festbettes enthalten. In diesem Festbett siedeln sich äробe Mikroorganismen an. Das Verfahren besteht also aus einer mechanischen Vorstufe und der nachgeschalteten biologischen Reinigungsstufe. Nach der DE-A-2 109 022 ist für eine gute Reinigungswirkung erforderlich, dass die verwendete Holzkohle eine Oberfläche von 10 bis höchstens 400 m²/g aufweist. Aktivkohlen zeigen demnach nur eine geringe Reinigungswirkung.

US-A-3 337 454 beschreibt ein mehrstufiges Verfahren zur Aufbereitung von Trinkwasser. In der ersten Stufe wird dem Rohwasser Aktivkohle zugesetzt und die Feststoffe durch Sedimentation und anschliessende Filtration abgetrennt. Die so vorgereinigte flüssige Phase wird in einer zweiten Stufe in Sandfiltern mit Chlor versetzt. Aus den Sandfiltern wird das gefilterte und chlorierte Wasser Kohledruckfiltern zugeführt, die mit kaustischer Sodalösung beaufschlagt werden. In der letzten Stufe wird das gereinigte Wasser abschliessend belüftet. Es wird nicht beschrieben, dass man die Sandfilterstufe einfach weglassen kann. Ausserdem wird den Kohledruckfiltern keine Luft zugeführt.

Ein wesentlicher Nachteil der bekannten Verfahren liegt darin, dass die Aktivkohle relativ schnell adsorptiv gesättigt und erschöpft ist und im allgemeinen nicht ohne Verlust der Adsorptions-Kapazität regeneriert werden kann. In diesem Fall muss die gesamte Aktivkohlefüllung erneuert werden, was mit einem grossen Materialverbrauch verbunden ist und daher wirtschaftlich nicht vertretbar ist.

Bei dem in DE-A-3 025 353 beanspruchten mehrstufigen Verfahren wird daher mit gefluteten Aktiv-Kohle-Kolonnen, bei denen das Abwasser unter Druck hindurchströmt gearbeitet.

Das Verfahren wird in zwei oder mehreren Stufen derart durchgeführt, dass die erste oder mehrere der vorderen Aktiv-Kohle-Kolonnen mit Luft oder Sauerstoff begast werden, während in der zweiten oder letzten Stufe keine Begasung erfolgt.

Ein spezielles Problem stellt ferner die Reinigung von Abwässern dar, die pestizide Stoffe aus Produktionsbetrieben von Pflanzenschutzmitteln enthalten. Nach der Reinigung sollte die Restkonzentration pestizider Stoffe auf extrem niedrige Werte abgesenkt sein.

Hier setzt die Erfindung an. Es lag die Aufgabe zugrunde, ein Verfahren zur Abwasserreinigung mittels Aktivkohle zu entwickeln, das über lange Standzeiten störungsfrei mit gleichbleibend gutem Wirkungsgrad betrieben werden kann und insbesondere eine effiziente Reinigung von pestizidhaltigen Abwässern ermöglicht.

Diese Aufgabe wird erfindungsgemäss dadurch gelöst, dass dem Abwasser in einer ersten Stufe pulverförmige Aktivkohle in feinverteilter Form zugesetzt wird, und die Feststoffe durch Sedimentieren, oder Zentrifugieren, oder Flotieren oder Filtrieren mechanisch abgetrennt werden und dann die so vorgereinigte flüssige Phase in einer zweiten Stufe in einen Aktivkohleadsorptionsturm eingeprüht wird und durch die Aktivkohle hindurchrieselt, wobei gleichzeitig Luft durch den Adsorptionsturm gedrückt wird. Vorzugsweise lässt man die Luft von oben nach unten durch den Adsorptionsturm hindurchstromen. Die Wirksamkeit der Vorstufe kann in vorteilhafter Weise dadurch verbessert werden, dass der Aktivkohle Filterhilfsmittel zugesetzt werden.

Der Adsorptionsturm wird bei einer Temperatur von 0 °C bis 50 °C, vorzugsweise bei 10 °C bis 30 °C betrieben.

Eine weitere Verbesserung erreicht man dadurch, dass der pH-Wert des Abwassers auf 5 bis 8, vorzugsweise 6 bis 7, eingestellt wird.

Weiterhin wurde gefunden, dass man besonders gute Ergebnisse erhält, wenn der in die zweite Stufe eintretende Abwassermengenstrom so eingestellt wird, dass der flachenspezifische Durchfluss im Adsorptionsturm 0,4 bis 2,5, vorzugsweise 1 bis 1,8 m³/m².h beträgt.

Das erfindungsgemässe Verfahren hat sich vor allem bei der Reinigung von relativ schwach belasteten Abwässern mit einem CSB-Wert zwischen 200 und 5000 bewährt. Ferner hat sich herausgestellt, dass es mit Erfolg zur Reinigung von Abwässern eingesetzt werden kann, die Emulgatoren und organische Lösungsmittel enthalten.

Mit der Erfindung werden folgende Vorteile erzielt:

Es wurde gefunden, dass vermutlich durch katalytische Oxidation und/oder mikrobiologischen Abbau der adsorbierten Stoffe in der zweiten Stufe die Aktivkohle im Adsorptionsturm ständig regeneriert wird, so dass sehr hohe Standzeiten erzielt werden. Bei der Reinigung pestizidhaltiger Abwässer ergab sich nach der zweiten Stufe eine Restkonzentration von Pestiziden unter 0,1 ppm. Eine derart geringe Restkonzentration konnte bisher mit anderen nicht-thermischen Verfahren nicht erreicht werden. Ein weiterer Vorteil liegt darin, dass der verfahrenstechische Aufwand des gesamten Verfahrens ebenso wie der Aktivkohleverbrauch relativ gering ist, so dass sowohl die Investitions-, als auch die Betriebskosten niedrig gehalten werden können.

Im folgenden wird die Erfindung anhand eines Verfahrensschemas (Fliessbett) und durch Ausführungsbeispiele näher erläutert.

In der ersten Stufe wird das zu behandelnde Abwasser in einen Rührwerkskessel 1 eingeleitet und dort mit 0,05 bis 0,5 Gew.-% pulverförmiger Aktivkohle und gegebenenfalls 0,01 bis 0,5 Gew.-% Filterhilfsmittel dispergiert. Die so erhaltene Dispersion wird dann mittels der Pumpe 2 in die Filterpresse 3 überführt. Das abgezogene Filtrat gelangt in ein Puffergefäss 4. Ein Teil des Filtrats kann durch die Leitung 5 in den Rührwerkskessel 1 rezirkuliert werden. Die erste Stufe führt zu einer Reduktion des CSB-Wertes von 80 bis 95% sowie zu einer Wirkstoffreduktion von 60 bis 99% (je nach Abwasserqualität und Wirkstoff). Gleichzeitig werden die Feststoffe durch das Filter 3 entfernt. Durch die erste Stufe wird also der grösste Teil der Schmutzfracht entfernt, so dass die nachfolgende zweite Verfahrensstufe entlastet wird. Erfahrungsgemäss schwanken die Analysenwerte des Filtrats in relativ weiten Bereichen; d.h. mit der ersten Stufe allein können die vorgeschriebenen Abwassergrenzwerte nicht eingehalten werden.

Das vorgereinigte Abwasser (Filtrat) wird in der zweiten Stufe mittels der Pumpe 6 von oben in einen Turm 7 eingesprüht, der mit Aktivkohlegranulat 8 gefüllt ist. Gleichzeitig wird durch die Leitung 9 Luft von oben nach unten durch den Turm 7 gedrückt. Das nach der zweiten Stufe anfallende gereinigte Abwasser läuft durch den Abfluss 10 in den Abwasserkanal. Die Abluft kann durch den Stutzen 11 entweichen. Der Turm 7 hat einen Durchmesser von 1 m. Die Höhe der Aktivkohleschüttung 8 liegt zwischen 1 und 3 m. Mittels der Pumpe 6 wird ein Strom von 0,2 bis 2 m³ Abwasser in den Turm 7 eindosiert. Der eingetragene Luftmengenstrom liegt im Bereich von 5 bis 10 m³/h.

Es wurde gefunden, dass die zweite Stufe den CSB-Wert nochmals um durchschnittlich 70% und die Wirkstoffkonzentration um mindestens 95% reduziert. Weiterhin wurde gefunden, dass trotz stark schwankender Abwasserbelastung im Eingang das gemäss der Erfindung behandelte Abwasser nur noch geringe Schwankungen aufweist. Daher ist erst aufgrund der zweistufigen Behandlung die Einhaltung der vorgegebenen Analysengrenzwerte gesichert.

Der oben erwähnte katalytische bzw. biologische Abbau der adsorbierten Stoffe im Turm 7 führt zu einer ständigen Regenerierung der Aktivkohle 8, so dass eine lange Standzeit erzielt wird. In der Praxis wird der Turm 7 nur etwa alle 8 Wochen gereinigt.

Dies geschieht durch Fluten des Turmes und Einleiten von Luft, so dass die A-Kohle als Festbett in ein Fliessbett überführt und damit die anhaftenden Schlammpartikel von der A-Kohle entfernt werden und als Suspension abgeleitet werden können.

Beispiel 1

Abwasser aus einem Pflanzenschutzformulierbetrieb wurde mit 0,2 Gew.-% (bezogen auf Abwasser) pulverförmige Aktivkohle (Carboraffin A) versetzt, 1/2 h gerührt und anschliessend über ein 1 m² Scheiblerfilter oder ein 0,5 m² Beutelfilter bei einem Druck von 3 bar filtriert. Das mit Pulverkohle vorgereinigte Abwasser wurde wie oben beschrieben durch den Turm 7 geleitet.

Die technischen Daten der A-Kohlensäule waren:

∅ 150 mm
Füllhöhe 1800 mm
Füllung 10 kg 4 mm Formkohle TD IV (Bayer)
Durchflussmenge 6 l/h

Das Ergebnis dieser Abwasserbehandlung ist in folgender Tabelle aufgeführt:

| Wasserinhaltsstoffe [mg/1] | unbehandeltes Abwasser | nach Stufe 1 | nach Stufe 2 | % Reduktion |
|---|---|---|---|---|
| Chem.-Sauerstoffbedarf (CSB) | 2880 | 1389 | 403 | 86 |
| TOC (Organ. Kohlenstoff) | 1014 | 434 | 140 | 86 |
| Carbofuran | 22,4 | 15,6 | < 0,09 | > 99,6 |
| Azinphos-methyl | 10 | 0,75 | < 0,06 | > 99,5 |
| Ethylparathion | 114 | 21 | 0,04 | > 99,9 |
| Fuberidazol | 0,66 | 0,09 | < 0,01 | > 98 |
| Triadimeton | 28,6 | 7,4 | < 0,33 | > 98,8 |
| Propoxur | 27,8 | 22,5 | < 0,25 | > 99,1 |
| Fenthion | 70 | 5,3 | < 0,13 | > 99,8 |
| Erkantol BXG | 95 | 54 | < 10 | > 89 |
| Schutzkolloid 63 TUG | 153 | 127 | < 10 | > 93 |
| Emulgator W | 429 | 171 | < 50 | > 88 |

## Beispiel 2

Analog Beispiel 1 werden 10 Abwasserproben behandelt.

Ergebnis (alle Werte in mg/1):

| | Roh-wasser | nach Pulver-kohlebehand-lung | nach A-Kohle-Turm |
|---|---|---|---|
| **TOC** | | | |
| min. | 340 | 130 | 53 |
| max. | 1060 | 480 | 340 |
| Durchschnitt | 598 | 268 | 160 |

| | | | |
|---|---|---|---|
| Eliminations-rate in % | = 0 | =55 | =73,2 |
| **CSB** | | | |
| min. | 843 | 351 | 55 |
| max | 2880 | 1389 | 865 |
| Durchschnitt | 1694 | 714 | 297 |
| Eliminations-rate in % | = 0 | = 58 | =82,5 |

## Beispiele 3 und 4

Das nach dieser Methode behandelte Abwasser wurde auf Fisch- und Daphnientoxizität untersucht.

| | TOC | CSB | Daph-nientoxi-zität | Fisch-toxi-zität |
|---|---|---|---|---|
| Beispiel 3) | | | | |
| Rohwasser | 532 | 1728 | 1:8000 | 1:100 |
| mit A-Kohle-beh. | 572 | 850 | 1: 200 | 1: 2 |
| nach A-Kohle-Turm | 159 | 518 | 1: 16 | 0 |
| Standzeit 4 Wochen | | | | |
| Beispiel 4) | | | | |
| Rohwasser | 1014 | 2880 | 1:8000 | 1:100 |
| nach A-Kohle-beh. | 434 | 1389 | 1:1000 | 1: 16 |
| nach A-Kohle-Turm | 140 | 402 | 1: 32 | 0 |
| Standzeit 5 Wochen | | | | |

## Beispiel 5

7 m$^3$ Abwasser aus einem Abfüllbetrieb für Pflanzenschutzmittel wurden mit 6 kg pulverförmige Aktivkohle (® Carboraffin A) und 2 kg Kieselgur versetzt und 1/2 h in dem Rührwerkskessel 1 verrührt. Das Abwasser wurde über eine 28 m$^2$-Filterpresse 3 filtriert und anschliessend über einen Aktivkohleturm 7 geleitet. Technische Daten des Turmes:

1 m Durchmesser
3,5 m Höhe
2,3 m Höhe der Kohleschüttung (4 mm Formkohle LEV 755, Bayer)
Durchflussmenge: 1,1 m$^3$ Abwasser/h und 7 m$^3$ Luft/h

Das Ergebnis dieser Abwasserbehandlung ist in folgender Tabelle aufgeführt:

| Wasserinhaltsstoffe [mg/l] | unbehan-deltes | nach Stufe 1 | nach Stufe 2 | % Re-duktion |
|---|---|---|---|---|
| CSB | 2692 | 609 | 146 | 94,6 |
| Metamitron | 1,1 | 0,9 | < 0,003 | >99,7 |
| Triadimefon | 20,5 | 14,4 | < 0,010 | >99,9 |
| Triadimenol | 4,5 | 6,9 (?) | 0,030 | 99,3 |
| Propylenthioharnstoff | 0,9 | 0,1 | < 0,02 | >97,7 |
| Unbekannte | 95 | 41 | 0,13 | 99,8 |

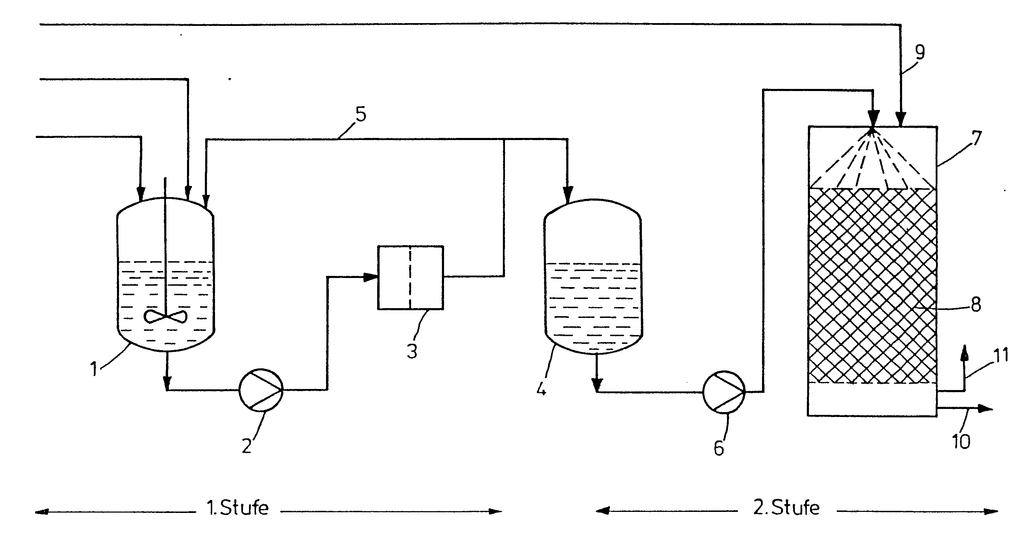

## Patentansprüche

1. Verfahren zur Reinigung von Abwasser, insbesondere pestizidhaltigem Abwasser, mittels Aktivkohle, dadurch gekennzeichnet, dass dem Abwasser in einer ersten Stufe pulverformige Aktivkohle zugesetzt und darin dispergiert wird und dann die Feststoffe durch Sedimentieren oder Zentrifugieren oder Filtrieren oder Flotieren mechanisch abgetrennt werden, und dass die vorgereinigte flüssige Phase in einer zweiten Stufe in einen Aktivkohle-Adsorptionsturm eingesprüht wird und durch die A-Kohle hindurchrieselt und gleichzeitig Luft durch den Adsorptionsturm gedrückt wird.

2. Verfahren nach Anspruch 1, dadurch gekennzeichnet, dass man die Luft von oben nach unten durch den Adsorptionsturm hindurchströmen lässt.

3. Verfahren nach Anspruch 1 bis 2, dadurch gekennzeichnet, dass der Aktivkohle in der ersten Stufe Filterhilfsmittel zugesetzt werden.

4. Verfahren nach Anspruch 1 bis 3, dadurch gekennzeichnet, dass der Adsorptionsturm bei einer Temperatur von 0 °C bis 50 °C, vorzugsweise 10 °C bis 30 °C, betrieben wird.

5. Verfahren nach Anspruch 1 bis 4, dadurch gekennzeichnet, dass der pH-Wert des Abwassers auf 5 bis 8, vorzugsweise 6 bis 7, eingestellt wird.

6. Verfahren nach Anspruch 1 bis 5, dadurch gekennzeichnet, dass der in die zweite Stufe eintretende Mengenstrom so eingestellt wird, dass der flächenspezifische Durchfluss im Adsorptionsturm 0,4 bis 2,5, vorzugsweise 1 bis 1,8 m³/m².h beträgt.

7. Verfahren nach Anspruch 1 bis 6, dadurch gekennzeichnet, dass es zur Reinigung von Abwässern mit CSB-Werten zwischen 200 bis 5000 eingesetzt wird.

8. Verfahren nach Anspruch 1 bis 7, dadurch gekennzeichnet, dass es zur Reinigung von Abwässern eingesetzt wird, die pestizide Emulgatoren und organische Lösungsmittel enthalten.

**Revendications**

1. Procédé d'épuration d'eaux résiduaires, notamment d'eaux résiduaires contenant des pesticides, au moyen de charbon actif, caractérisé en ce qu'on ajoute à l'eau résiduaire dans une première étape du charbon actif en poudre et on l'y disperse, puis on sépare mécaniquement les matières solides par sédimentation ou par centrifugation ou par filtration ou par flottation, et en ce que la phase liquide préépurée est injectée dans une seconde étape dans une tour d'adsorption contenant du charbon actif et on la fait ruisseler à travers le charbon actif, en même temps qu'on introduit de l'air sous pression dans la tour d'adsorption.

2. Procédé suivant la revendication 1, caractérisé en ce qu'on fait passer le courant d'air de haut en bas dans la tour d'adsorption.

3. Procédé suivant les revendications 1 et 2, caractérisé en ce qu'on ajoute une substance auxiliaire de filtration au charbon actif dans la première étape.

4. Procédé suivant les revendications 1 à 3, caractérisé en ce qu'on fait fonctionner la tour d'adsorption à une température de 0 à 50 °C, de préférence de 10 à 30 °C.

5. Procédé suivant les revendications 1 à 4, caractérisé en ce qu'on règle le pH de l'eau résiduaire à une valeur de 5 à 8, de préférence de 6 à 7.

6. Procédé suivant les revendications 1 à 5, caractérisé en ce qu'on règle la quantité introduite dans la seconde étape de manière que le débit par unité de surface dans la tour d'adsorption ait une valeur de 0,4 à 2,5 et, de préférence de 1 à 1,8 m³/m².h.

7. Procédé suivant les revendications 1 à 6, caractérisé en ce qu'il est utilisé pour l'épuration d'eaux résiduaires ayant des valeurs de BOC entre 200 et 5000.

8. Procédé suivant les revendications 1 à 7, caractérisé en ce qu'on l'utilise pour épurer des eaux résiduaires qui contiennent des émulsionnants pour pesticides et des solvants organiques.

**Claims**

1. Process for the purification of effluent, in particular pesticide-containing effluent, by means of active charcoal, characterized in that in a first stage pulverulent active charcoal is added to the effluent and dispersed therein, and the solids are then separated off mechanically by sedimentation or centrifugation or filtration or flotation, and in that in a second stage the pre-purified liquid phase is sprayed into an active charcoal adsorption tower and trickled through the A charcoal, and at the same time air is forced through the adsorption tower.

2. Process according to claim 1, characterized in that the air is allowed to flow through the adsorption tower from the top downwards.

3. Process according to claims 1 to 2, characterized in that in the first stage filtering auxiliaries are added to the active charcoal.

4. Process according to claims 1 to 3, characterized in that the adsorption tower is operated at a temperature of 0 °C to 50 °C, preferably 10 °C to 30 °C.

5. Process according to claims 1 to 4, characterized in that the pH of the effluent is brought to 5 to 8, preferably 6 to 7.

6. Process according to claims 1 to 5, characterized in that the amount flowing into the second stage is adjusted so that the flow per unit area in the adsorption tower is 0,4 to 2,5, preferably 1 to 1,8 m³/m².h.

7. Process according to claims 1 to 6, characterized in that it is employed for purification of effluents with COD values between 200 and 5000.

8. Process according to claims 1 to 7, characterized in that it is employed for purification of effluents containing pesticidal emulsifiers and organic solvents.

1. Stufe                          2. Stufe

EP 0 176 912 B1